(19) Europäisches Patentamt
European Patent Office
Office européen des brevets

(11) Publication number: 0 360 437 A1

(12) EUROPEAN PATENT APPLICATION

(21) Application number: 89308742.9

(51) Int. Cl.5: A01N 37/20 , A01N 37/38

(22) Date of filing: 30.08.89

(30) Priority: 30.08.88 GB 8820472

(43) Date of publication of application: 28.03.90 Bulletin 90/13

(84) Designated Contracting States: AT BE CH DE ES FR GB GR IT LI LU NL SE

(71) Applicant: NATIONAL RESEARCH DEVELOPMENT CORPORATION
101 Newington Causeway
London SE1 6BU(GB)

(72) Inventor: Usherwood, Peter Norman Russell
35 Normanby Road Wollaton
Nottingham NG8 2TA(GB)

Inventor: Bycroft, Barrie Walsham
14 The Cloisters Salthouse Lane Beeston
Nottingham NG9 2FY(GB)
Inventor: Blagbrough, Ian Stuart
209 Toton Lane Stapleford
Nottingham NG9 7JD(GB)
Inventor: Mather, Alan John
14A Rose Grove Beeston
Nottingham NG9 1PB(GB)

(74) Representative: Cardnell, Peter Harry Morley
Patent Department National Research Development Corporation 101 Newington Causeway
London SE1 6BU(GB)

# (54) Biocidal polyamine-amides.

(57) Compounds of formula I optionally in the form of an acid addition salt

I:

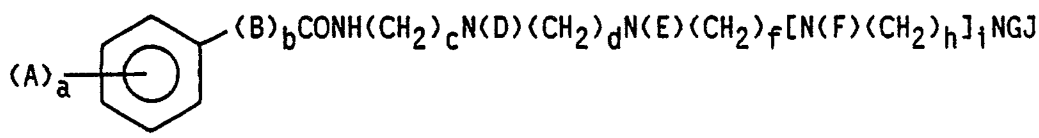

in which formula:
A represents a substituent which is:
hydroxyl, O-alkyl, O-cycloalkyl, O-alkenyl, O-aryl, O-aralkyl, O-carbamate, O-carbonate, O-acyl or halogen
a is O-5;
the substituents A are identical or different when a is more than 1;
B represents a $C_1$-$C_6$ aliphatic hydrocarbon group optionally carrying one or more of the substituents: hydroxyl, amino, halogen, $C_1$-$C_4$ alkoxy, $C_1$-$C_4$ alkyl, aryloxy or carboalkoxy and optionally comprising one or more sites of unsaturation and/or one or more carbonyl groups or ketal derivatives thereof;
b is 0 or 1;
c, d, f and h, which may be identical or different, are 2, 3, 4, 5 or 6;
and i is 0 or 1
D, E and F, which may be identical or different, represent hydrogen or $C_1$-$C_4$ alkyl or cycloalkyl, and
G and J which may be identical or different represent hydrogen, alkyl or cycloalkyl or G and J together with the nitrogen atom to which they are attached represent a saturated heterocyclic ring system are of value as

EP 0 360 437 A1

biocides.

# BIOCIDAL POLYAMINE - AMIDES

This invention relates to polyamine amides useful as biocides particularly suitable for agricultural or horticultrual application.

Accordingly, the present invention comprises the use as a biocide of a compound of formula I, optionally in the form of an acid addition salt

I:

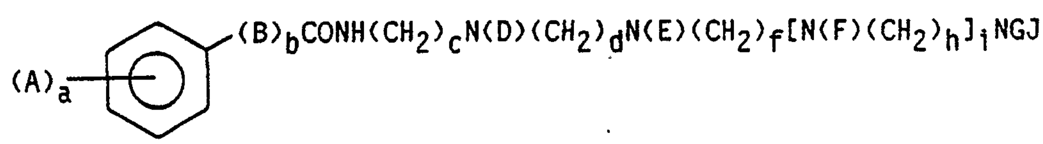

in which formula:
A represents a substituent which is:
hydroxyl, O-alkyl, O-cycloalkyl, O-alkenyl, O-aryl, O-aralkyl, O-carbamate, O-carbonate, O-acyl or halogen
a is O-5;
the substituents A are identical or different when a is more than 1;
B represents a $C_1$-$C_6$ aliphatic hydrocarbon group optionally carrying one or more of the substituents: hydroxyl, amino, halogen, $C_1$-$C_4$ alkoxy, $C_1$-$C_4$ alkyl, aryloxy or carboalkoxy and optionally comprising one or more sites of unsaturation and/or one or more carbonyl groups or ketal derivatives thereof;
b is O or 1;
c, d, f and h, which may be identical or different, are 2, 3, 4, 5 or 6;
and i is 0 or 1
D, E and F, which may be identical or different, represent hydrogen or $C_1$-$C_4$ alkyl or cycloalkyl, and
G and J which may be identical or different represent hydrogen, alkyl or cycloalkyl or G and J together with the nitrogen atom to which they are attached represent a saturated heterocyclic ring system.

Typically: when a represnets O-alkyl, the alkyl group is $C_1$-$C_4$ alkyl; when A represents O-cycloalkyl the group is cyclohexyl; when A represents O-alkenyl the alkenyl group is a $C_1$-$C_4$ alkenyl group such as ethenyl, propenyl or butenyl; when A represents O-aryl, the aryl group is a phenyl group; when A represents O-aralkyl, the aralkyl group is a $C_7$-$C_{10}$ phenalkyl group; when A represents O-carbamate, the O-carbamate group is of formula -O-CO-$NR^IR^{II}$ where $R^1$ and $R^{11}$, which may be identical or different, represent $C_1$-$C_4$ alkyl groups; when A represents O-carbonate, the O-carbonate is of formula -O-CO-$OR^{III}$ wherein $R^{III}$ represents a $C_1$-$C_4$ alkyl group; when A represents O-acyl, the O-acyl group is of formula -O-CO-$R^{IV}$ wherein $R^{IV}$ represents a $C_1$-$C_4$ alkyl group e.g. methyl and when A represents halogen, the halogen is typically Cl, Br or F.

It will be appreciated that the compounds in which A represents a substitutent other than hydroxyl or halogen may act through conversion in vivo to the corresponding compound in which the group or groups A are hydroxy groups. Indeed the present invention extends in general to compounds of formula (I) as defined above in which A is hydroxyl when in a pro-form which delivers the hydroxyl group - containing compound in use.

Although a may be 0-5, it is typically at least 1 and normally no more than 3, mono or di substitution of the aromatic ring being preferred and disposition of a mono substituent e.g. a hydroxyl group, at the 2, 3 or 4 position in the ring being especially so.

The aliphatic hydrocarbon group B is typically unbranched and generally contains no more than two carbon atoms intermediate between the aromatic ring and the carbonyl group of the $COHN(CH_2)_c$- function. It will be appreciated that, when present, substituents may be identical or different. Sites of unsaturation may be present as double bonds (typically configurationally trans) or triple bonds or both. Groups of the following formula are of particular interest, $R_1$ $R_2$ and $R_3$ representing hydrogen or one or more of the substituents hereinbefore described as carried on the $C_1$-$C_6$ aliphatic hydrocarbon group: $-CHR_1-$, $-CHR_1CHR_2-$, $-CR_1=CR_2-$, $-CHR_1CHR_2CHR_3-$, $-CR_1=CR_2CHR_3-$ and $-CHR_1-CR_2=CR_3-$.

Although $R_1$, $R_2$ and $R_3$ may represent one or more of the hereinbefore identified substituents it is most usual for all to be hydrogen.

Usually no more than one carbonyl group or a ketal derivative thereof is present in the group B (i.e. one carbon atom of the $C_{1-6}$ aliphatic hydrocarbon group is substituted by an oxo group or such a group in ketal form) and there is generally at least one other carbon atom present in the carbon chain between the aromatic ring and the $CONH(CH_2)_c$- function as in the phenylpyruvic and hydroxyphenylpyruvic moieties wherein B represents $-CH_2CO-$, which are of particular interest. When a carbonyl group is derivatised as a ketal group, of formula $-C(OR_a)(OR_b)-$, $R_a$ and $R_b$, which may be identical or different, represent $C_1$-$C_6$ alkyl groups e.g. methyl or ethyl groups or groups which are linked together to form a ring incorporating the carbon and two oxygen atoms as for example in the ethylene ketal wherein $R_a$ and $R_b$ each represent $-CH_2$-.

D, E anf F may be $C_{1-4}$ alkyl or, for example, $C_3$-$C_6$ cycloalkyl but it is generally preferred for D, E and F to each represent hydrogen and for i to be zero. In compounds of particular interest the values for c, d and f are each 3 (as in bis (3-aminopropyl)-1,3-propanediamine) or, respectively 3, 4 and 3 (as in spermine).

Although generally the substituents G and J each represent hydrogen, G and J may represent certain organic groups as indicated and particularly each of G and J may independently represent $C_1$-$C_4$ alkyl or $C_3$-$C_6$ cycloalkyl or together may represent a $C_2$-$C_6$ alkylene group, for example a tetramethylene, pentamethylene or hexamethylene group or a group $-CH_2CH_2$-0-$CH_2CH_2$- (to form a morpholine ring system).

Compounds of formula I which are of particular interest include those with the following formulae:

(a) 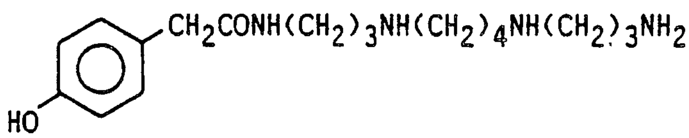

(b) 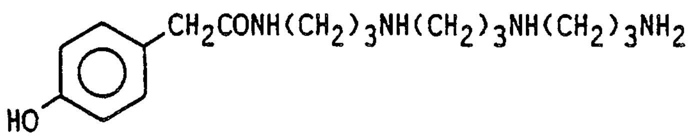

(c) 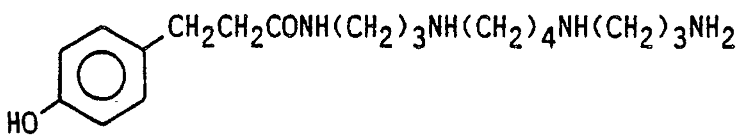

(d) 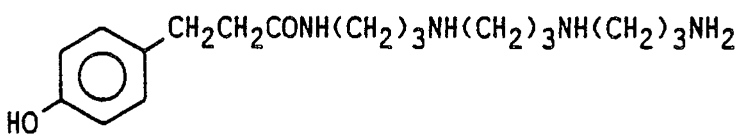

Acid addition salts of compounds of formula (I) in accordance with the invention are preferably acceptable to mammals although other acid addition salts are within the scope of the invention. Suitable salts are those derived from, for example, the following acids: hydrochloric, hydrobromic, sulphuric, nitric, isethionic, phosphoric, maleic, salicylic, p-toluenesulphonic, tartaric, citric, lactobionic, formic, malonic, pantothenic, succinic, naphthalene-2-sulphonic, benzenesulphonic, methanesulphonic and ethanesulphonic. The preferred salts in terms of pharmaceutical acceptability are the ethanesulphonic acid salts.

Such salts may be prepared from the free-base by treatment with the acid suitably in a polar solvent such as water and if necessary with the application of heat.

The compounds of the present invention may be readily produced by reaction between an acid and an amine moiety.

Accordingly to a further aspect of the present invention a process for the production of a compound of formula I comprises reacting an acid of formula II or esterifiable derivative thereof, e.g. an acid halide,

II

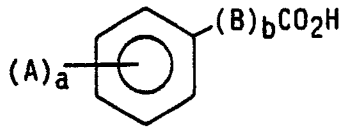

with an amine or of formula III or acid addition salt thereof:

III $NH_2(CH_2)_cN(D)(CH_2)_dN(E)(CH_2)_f[N(F)(CH_2)_h]_iNGJ$,

in which formulae the symbols have the hereinbefore given meanings.

In general the reaction is conducted in an organic solvent such as 1,2-dimethoxyethane or tetrahydrofuran or dioxan in the presence of a coupling reagent such as a carbodiimide e.g. dicyclohexylcarbodiimide or another carbodiimide e.g. 1-cyclohexyl-3-(2-morpholinoethyl)carbodiimide-metho-p-toluenesulphonate (morpho CDI, Aldrich), or 1-(3-dimethylaminopropyl)-3- ethylcarbodiimide hydrochloride or methiodide (water soluble reagents, EDC, Aldrich), or 1,3-diisopropylcarbodiimide. The product may be readily purified by chromatography and/or lyophilisation.

The acid (or esterifiable derivative) thereof may, for example, be benzoic, phenylacetic, phenylpropanoic, or cinnamic or substituted derivatives e.g. hydroxyphenylglycine, dopa, tyrosine, hydroxyphenylpyruvic-, hydroxyphenylacetic- and hydroxymandelic acid.

Compounds of formula I are of particular interest for application to pests such as arthropods including insect species and especially those species which are prey to spiders such as locusts, grasshoppers, blowfly larvae and also Lepidoptera larvae and arachnids, e.g. mites. Application inter alia as a fungicide, nematocide or molluscide is also envisaged.

The present invention further includes within its scope a composition for use as a biocide, for example as an arthropod biocide e.g. an insecticide or acaricide or for use as a herbicide, nematocide, fungicide or molluscide which composition comprises a compound of formula I together with a diluent or carrier therefor.

Compositions may be in the form of dusts and granular solids, wettable powders, mosquito coils and other solid preparations or as emulsions, emulsifiable concentrates, sprays and aerosols and other liquid preparations after the addition of appropriate solvents, diluents and surface-active agents.

The present compositions of the invention normally contain from 0.001 to 25% by weight of the compound of formula I but the compositions can contain higher concentrations of active ingredient of formula I e.g. up to 95% in compositions to be sold as concentrates for dilution before use by the ultimate user.

The compositions can, depending on the intended application, include diluents such as hydrocarbon oils, e.g. xylene or other petroleum fractions, water, anionic, cationic or non-ionic surface-active agents, anti-oxidants and other stabilisers as well as perfumes and colouring matters. These inert ingredients may be of the type and in proportions such as are conventionally used in pesticidal compositions.

In addition to these active ingredients, the compositions of the present invention may contain one or more futher active ingredients which may be other pesticidal compounds and the composition may also include synergists.

Compounds of formula I may be applied in such a manner that pest infestation is diminished or prevented or both.

In accordance with a further aspect of the present invention, a method of pest control comprises treating a pest or a surface or environment susceptible to pest infestation with an effective amount of a compound of formula I.

The compounds or compositions of the invention can be used as, for example, insecticides or acaricides in a domestic environment by spraying rooms to combat infestation with houseflies or other insects, they can be used for treatment of stored crops or cereals to combat infestation by insects or other pests, they can be used to spray growing crops, e.g. cotton to combat infestation by common pests and they can be used in the medical or veterinary field, e.g as a cattle spray to prevent or treat infestation by insects or other pests.

It will be appreciated, of course, that in order to be acceptable for application particularly in agriculture and horticulture, compounds of formula I hereinbefore described should exhibit a low level of mammalian toxicity combined with a high degree of pesticidal effectiveness.

The invention is illustrated by the following Examples:

General procedure for the preparation of monoacyl spermines.

To a solution of the required carboxylic acid in an organic solvent such as 1,2-dimethoxyethane or dichloromethane an activating agent e.g. dicyclohexyl carbodiimide was added. The polyamine was introduced in slight excess (two-four fold) in order to increase the yield of the desired monoacylated

product. The product was isolated by chromatography over Kieselgel 60 (230-400 mesh). The final product was always soluble in water and was therefore purified by lyophilisation as a final step.

Loucst Test Method and rationale

The compounds were assayed for biological activity on the isolated, retractor unguis nerve-muscle preparation of the locust Schistocerca gregaria (Usherwood, P.N.R and Machili, P. (1968) J. Exp. Biol., 49: 341.). Isolated muscle preparations were bathed continuously in standard locust saline in a bath of volume 250µl. Twitch tension recordings of the muscle were made to electrical stimulation of its motor innervation supramaximal voltage, frequency 0.1Hz).

The locust isolated retractor unguis nerve-muscle is a preparation with well characterised muscle receptors belonging to the quisqualate-sensitive class (Boden, P. et al., (1986) Brain Res., 385: 205.). This preparation has previously been employed to identify antogonists of excitatory amino acid receptors, (e.g. Bateman, A. et al., (1985) Brain Res., 339: 237 and Budd, T. et al., (1988) Brain Res., 448: 30.).

Example 1

N-(2-Hydroxyphenylacetyl)-spermine. To a solution of 2-hydroxyphenylacetic acid (50mg, 0.33mMol) in 1,2-dimethoxyethane (DME) (1ml) was added a solution of dicyclohexyl carbodiimide (71mg, 0.34mMol, 1.05 equivalents) in DME (1ml) in one portion of 25°C. The colourless mixture was allowed to stand at 25°C for 3h during which time a voluminous white precipitate of the urea was formed. This precipitate was then removed by filtration and the residue washed with DME (2 X 1ml). The filtrate and the washings were combined and a solution of spermine (351mg, 1.73mMol, 5.3 equivalents) in DME/dimethylformamide (2ml, 1:1) was added in one portion. The colourless, homogeneous solution was sealed under an atmosphere of nitrogen and allowed to stand at 25°C for 48h. The solution was concentrated in vacuo (water aspirator) and then the residue was applied to a column of silica gel (Kieselgel 60, 230-400 mesh). The produce was eluted with dichloromethane/methanol/0.880 ammonia solution (4:2:1). The desired amide was eluted in fractions 9-14 (10ml fractions) and was homogeneous when monitored by tlc on silica ($CH_2Cl_2/MeOH/NH_4OH$, 4:2:1), $R_f = 0.25$, chromatogram visualised by inspection under UV light (254nm) and by the production of a pink-purple stain with 0.3% ninhydrin in solution in acidic alcohol. The fractions containing the product were combined and concentrated in vacuo to yield a colourless oil. This oil was dissolved in methanol (2ml), filtered and the solution was then concentrated in vacuo (51mg, 46%). The residue was dissolved in distilled water (2ml) and lyophilised which gave the amide as a colourless, viscous oil (48mg) whose spectroscopic data include: $UV_{max}$ 271 ($e_{max}$1 000) and 289sh nm; pmr (90 MHz, $^2H_2O$) 1.5-1.9 (m, 8H, 4 X $CH_2$-$CH_2$), 2.6-2.9 (m, 10H, 5 X $CH_2$-N), 3.25 (t, J = 7, 2H, CON$^2$H-$CH_2$-$CH_2$, 3.55 (s, 2H, Ar-$CH_2$-CO), 6.55-6.85 (m, 2H, 2 X ArH 3,5), and 7.1-7.3 (m, 2H, 2X ArH 4,6)ppm; $M+1$ 337 (FAB matrix m-nitrobenzyl alcohol) $C_{18}H_{32}N_4O_2$ requires $M^+$ 336).

The potency of this monocylated spermine as an antagonist of the complex formed by the invertebrate L-quisqualate sub-type L-glutamate receptor and its ion channel was assayed using the electrically stimulated retractor unguis muscle of the locust (Schistocerca gregaria). Twitch amplitude was reduced (1% inhibition) from control (100%) levels at the following concentrations:

| | |
|---|---|
| $3 \times 10^{-8}$M | 10% inhibition of twitch |
| $3 \times 10^{-7}$M | 15% |
| $3 \times 10^{-6}$M | 20% |
| .$1.5 \times 10^{-5}$M | 30% |
| $3 \times 10^{-5}$M | 30% |
| $1.5 \times 10^{-4}$M | 85% |
| $3 \times 10^{-4}$M | 90% |
| The $IC_{50}$ = $6.2 \times 10^{-5}$M | |

Example 2

N-(3-Hydroxyphenylacetyl)-spermine. To a solution of 3-hydroxyphenylacetic acid (50mg, 0.33mMol) in 1,2-dimethoxyethane (DME) (1ml) was added a solution of dicyclohexyl carbodiimide (75mg, 0.36mMol, 1.1 equivalents) in DME (1ml) in one portion of 25°C. The colourless mixture was allowed to stand at 25°C for 3h during which time a voluminous white precipitate of the urea was formed. This precipitate was then removed by filtration and the residue washed with DME (2 X 1ml). The filtrate and the washings were combined and a solution of spermine (167mg, 0.83mMol, 2.5 equivalents) in DME/dimethylformamide (2ml, 1:1) was added in one portion. The colourless, homogeneous solution was sealed under an atmosphere of nitrogen and allowed to stand at 25°C for 24h. The solution was concentrated in vacuo (water aspirator) and then the residue was applied to a column of silica gel (Kieselgel 60, 230-400 mesh). The product was eluted with dichloromethane/methanol/0.880 ammonia solution (4:2:1). The desired amide was eluted in fractions 12-18 (10ml fractions) and was homogeneous when monitored by tlc on silica ($CH_2Cl_2/MeOH/NH_4OH$, 4:2:1), $R_f = 0.18$, chromatogram visualised by inspection under UV light (254nm) and by the production of a pink-purple stain with 0.3% ninhydrin in solution in acidic alcohol. The fractions containing the product were combined and concentrated in vacuo to yield a colourless oil. This oil was dissolved in methanol (2ml), filtered and the solution was then concentrated in vacuo (36mg, 33%). The residue was dissolved in distilled water (2ml) and lyophilised which gave the amide as a colourless, viscous oil (30mg) whose spectroscopic data include:- $UV_{max}$ 274sh, 278 ($e_{max}$ 950), and 290sh nm; pmr (90 MHz, $2H_2O$) 1.2-2.0 (m, 8H, 4 X $CH_2$-$CH_2$), 2.5-2.9 (m, 10H, 5 x $CH_2$-N), 3.3 (t, J=7, 2H, $CON^2H$-$CH_2$-$CH_2$), 3.5 (s, 2H, Ar-$CH_2$-CO), 6.45-6.75 (m, 3H, 3 X ArH 2,4,6), and 7.0-7.3 (m, 1H, ArH 5)ppm: M+1 337 (FAB matrix m-nitrobenzyl alcohol) ($C_{18}H_{32}N_4O_2$ requires $M^+$ 336).

The potency of this monoacylated spermine as an antagonist of the complex formed by the invertebrate L-quisqualate sub-type L-glutamate receptor and its ion channel was assayed using the electrically stimulated retractor unguis muscle of the locust (Schistocerca gregaria). Twitch amplitude was reduced from control (100%) levels at the following concentrations:

| | |
|---|---|
| $3 \times 10^{-8}$M | 30% |
| $3 \times 10^{-7}$M | 35% |

Example 3

N-(4-Hydroxyphenylacetyl)-spermine. To a solution of 4-hydroxyphenylacetic acid (80mg, 0.53mMol) in 1,2-dimethoxyethane (DME) (1ml) was added a solution of dicyclohexyl carbodiimide (120mg, 0.58mMol, 1.1 equivalents) in DME (1ml) in one portion at 25°C. The colourless mixture was allowed to stand at 25°C for 3 h during which time a voluminous white precipitate of the urea was formed. This precipitate was then removed by filtration and the residue washed with DME (2 X 1ml). The filtrate and the washings were combined and a solution of spermine (600mg, 2.97mMol, 5.6 equivalents) in DME/dimethylformamide (2ml, 1:1) was added in one portion. The colourless, homogeneous solution was sealed under an atmosphere of nitrogen and allowed to stand at 25°C for 48h. The solution was concentrated in vacuo (water spirator) and then the residue was applied to a column of silica gel (Kieselgel 60, 230-400 mesh). The product was eluted with dichloromethane/methanol/0.880 ammonia solution (4:2:1). The desired amide was eluted in fractions 8-13 (10ml fractions) and was homogeneous when monitored by tlc on silica ($CH_2Cl_2/MeOH/NH_4OH$, 4:2:1), $R_f = 0.17$, chromatogram visualised by inspection under UV light (254nm) and by the production of a pink-purple stain with 0.3% ninhydrin in solution in acidic alcohol. The fractions containing the product were combined and concentrated in vacuo to yield a colourless oil. This oil was dissolved in methanol (2ml), filtered and the solution was then concentrated in vacuo (65mg, 37%). The residue was dissolved in distilled water (2ml) and lyophilised which gave the amide as a colourless, viscous oil (57mg) whose spectroscopic data include:- $UV_{max}$ 220 ($e_{max}$ 6 000) and 270 ($e_{max}$ 1 300) nm: pmr (90 MHz, $^2H_2O$) 1.2-2.0 (m, 8H, 4 X $CH_2$-$CH_2$-$CH_2$), 2.5-2.9 (m, 10H, 5 X $CH_2$-N), 3.2 (t, J=7, 2H, $CON^2H$-$CH_2$-$CH_2$), 3.4 (s, 2H, Ar-$CH_2$-CO), 6.7 (d, J=8, 2H, 2 X ArH 3,5), and 7.1 (d, J=8, 2H, 2 X ArH 2,6)ppm: M+1 337 (FAB matrix m-nitrobenzyl alcohol) ($C_{18}H_{32}N_4O_2$ requires M+ 336).

The potency of this monoacylated spermine as an antagonist of the complex formed by the invertebrate L-quisqualate sub-type L-glutamate receptor and its ion channel was assayed using the electrically stimulated retractor unguis muscle of the locust (Schistocerca gregaria). Twitch amplitude was reduced from control (100%) levels at the following concentrations:

| | |
|---|---|
| $5.9 \times 10^{-7}$ M | 9% |
| $5.9 \times 10^{-6}$ M | 25% |
| $2.95 \times 10^{-5}$ M | 74% |
| $4.43 \times 10^{-5}$ M | 91% |
| $5.9 \times 10^{-5}$ M | 96% |
| The $IC_{50}$ = $8.7 \times 10^{-6}$ M | |

Example 4

N-(2-Hydroxyphenylpropanoyl)-spermine.-To a solution of 2-hydroxyphenylpropanoic acid (61 mg, 0.37 mMol) in 1,2-dimethoxyethane (DME) (1 ml) was added a solution of dicyclohexylcarbodiimide (76 mg, 0.37 mMol) in DME (1 ml) in one portion at 25 °C. The colourless mixture was allowed to stand at 25 °C for 3 h during which time a voluminous white precipitate of the urea was formed. This precipitate was then removed by filtration and the residue washed with DME (2 x 1 ml). The filtrate and the washings were combined and a solution of spermine (300 mg, 1.48 mMol, 4.0 equivalents) in DME/dimethylformamide (2 ml, 1:1) was added in one portion. The colourless, homogeneous solution was sealed under an atmosphere of nitrogen and allowed to stand at 25 °C for 48 h. The solution was concentrated in vacuo (water aspirator) and the residue was then applied to a column of silica gel (Kieselgel 60, 230-400 mesh). The product was eluted with dichloromethane/methanol/0.880 ammonia solution (4:2:1). The desired amide was eluted in fractions 7-11 (10 ml fractions) and was homogeneous when monitored by tlc on silica ($CH_2Cl_2$/MeOH/$NH_4OH$, 4:2:1), $R_f$ = 0.33, chromatogram visualised by inspection under UV light (254 nm) and by the production of a pink-purple stain with 0.3% ninhydrin in solution in acidic alcohol. The fractions containing the product were combined and concentrated in vacuo to yield a colourless oil.

This oil was dissolved in methanol (2 ml), filtered and the solution was then concentrated in vacuo (112 mg, 87%). The residue was dissolved in distilled water (2 ml) and lyophilised which gave the amide as a colourless, viscous oil (82 mg) whose spectroscopic data include: pmr (90 MHz, $^2H_2O$) 1.3-2.1 (m, 8H, 4 x $CH_2$-$CH_2$), 2.5-3.1 (m, 14H, 5 x $CH_2$-N and Ar-$CH_2$-$CH_2$), 3.3 (t, J = 7, 2H, CON$^2$H-$CH_2$-$CH_2$), 6.7-7.0 (m, 2H, 2 x ArH 3,5), and 7.1-7.4 (m, 2H, 2 x ArH 4,6)ppm.

The potency of this monoacylated spermine as an antagonist of the complex formed by the invertebrate L-quisqualate sub-type L-glutamate receptor and its ion channel was assayed using the electrcically stimulated retractor unguis muscle of the locust (Schistocerca gregaria). Twitch amplitude was reduced from control levels between the following concentrations: $1 \times 10^{-5}$ M and $9 \times 10^{-5}$ M, such that an approximately 50% reduction was obtained at $5 \times 10^{-5}$ M.

Example 5

N(3-Hydroxyphenylpropanoyl)-spermine. To a solution of 3-hydroxyphenylpropanoic acid (167 mg, 1.01 mMol) in dichloromethane (5 ml) was added dicyclohexylcarbodiimide (226 mg, 1.10 mMol, 1.1 equivalents) in one portion at 25 °C. The colourless mixture was allowed to stand at 25 °C for 2 h during which time a voluminous white precipitate of the urea was formed. This precipitate was then removed by filtration and the residue washed with dichloromethane (1 ml). The filtrate and the washings were combined and spermine (400 mg, 1.98 mMol, 1.96 equivalents) was added in one portion. The colourless, homogeneous solution was sealed under an atmosphere of nitrogen and allowed to stand at 25 °C for 4 h. The solution was concentrated in vacuo (water aspirator) and the residue was then applied to a column of silica gel (Kieselgel 60, 230-400 mesh). The product was eluted with dichloromethane/methanol/0.880 ammonia solution (4:2:1). The desired amide was eluted in fractions 13-19 (10 ml fractions) and was homogeneous when monitored by tlc on silica ($CH_2Cl_2$/MeOH/$NH_4OH$, 4:2:1), $R_f$ = 0.11, chromatogram visualised by inspection under UV light (254 nm) and by the production of a pink-purple stain with 0.3% ninhydrin in solution in acidic alcohol. The fractions containing the product were combined and concentrated in vacuo to yield a colourless oil. This oil was dissolved in methanol (2 ml), filtered and the solution was then concentrated in vacuo (105 mg, 30%). The residue was dissolved in distilled water (2 ml) and lyophilised which gave the amide as a colourless glass (80 mg) whose spectroscopic data include: $UV_{max}$ 217 ($e_{max}$ 2 500) and 272 ($e_{max}$ 1 200)-

nm; pmr (90 MHz, $^2H_2O$) 1.5-2.0 (m, 8H, 4 x $CH_2$-$CH_2$), 2.4-3.0 (m, 14H, 5 x $CH_2$-N and Ar-$CH_2$-$CH_2$), 3.2 (t, J = 7, 2H, $CON^2H$-$CH_2$-$CH_2$), 6.55-6.75 (m, 3H, 3 x ArH 2,4,6), and 7.05-7.3 (m, H, ArH 5)ppm; M+1 351 (FAB matrix m-nitrobenzyl alcohol) $C_{19}H_{34}N_4O_2$ requires $M^+$ 350).

The potency of this monoacylated spermine as an antagonist of the complex formed by the invertebrate L-quisqualate sub-type L-glutamate receptor and its ion channel was assayed using the electrically stimulated retractor unguis muscle of the locust (Schistocerca gregaria). Twitch amplitude was reduced from control (100%) levels at the following concentrations: 1.08 x $10^{-7}$M 10% inhibition of twitch 1.08 x $10^{-6}$M 15%.

## Example 6

N-(4-Hydroxycinnamoyl)-spermine.-To a solution of 4-hydroxycinnamic acid (82 mg, 0.50 mMol) in 1,2-dimethoxyethane (DME) (1 ml) was added a solution of dicyclohexylcarbodiimide (106 mg, 0.51 mMol, 1.03 equivalents) in DME (1 ml) in one portion at 25°C. The colourless mixture was allowed to stand at 25°C for 3 h during which time a voluminous white precipitate of the urea was formed. This precipitate was then removed by filtration and the residue washed with DME (2 x 1 ml). The filtrate and the washings were combined and a solution of spermine (336 mg, 1.66 mMol, 3.3 equivalents) in DME/dimethylformamide (2 ml, 1:1) was added in one portion. The yellow, homogeneous solution was sealed under an atmosphere of nitrogen and allowed to stand at 25°C for 48 h. The solution was concentrated in vacuo (water aspirator) and the residue was then applied to a column of silica gel (Kieselgel 60, 230-400 mesh). The product was eluted with dichloromethane/methanol/0.880 ammonia solution (4:2:1). The desired amide was eluted in fractions 11-16 (10 ml fractions) and was homogeneous when monitored by tlc on silica ($CH_2Cl_2$/MeOH/$NH_4OH$, 4:2:1), $R_f$ = 0.21, chromatogram visualised by inspection under UV light (254 nm) and by the production of a pink-purple stain with 0.3% ninhydrin in solution in acidic alcohol. The fractions containing the product were combined and concentrated in vacuo to yield a pale yellow oil.

This oil was dissolved in methanol (2 ml), filtered and the solution was then concentrated in vacuo (30 mg, 17%). The residue was dissolved in distilled water (2 ml) and lyophilised which gave the amide as a colourless, viscous oil (30 mg) whose spectroscopic data include: $UV_{max}$ 224 293 and 312sh nm; pmr (90 MHz, $^2H_2O$) 1.4-2.0 (m, 8H, 4 x $CH_2$-$CH_2$), 2.6-3.0 (m, 10H, 5 x $CH_2$-N), 3.35 (t, J = 7, 2H, $CON^2H$-$CH_2$-$CH_2$), 6.36 (d, J = 16, 1H, CH=CH-CO) 6.6-6.9 (m, 2H, 2 x ArH 3,5), and 7.2-7.6 (m, 3H, 2 x ArH 2,6 and Ar-CH=CH)ppm; M+1 349 (FAB matrix m-nitrobenzyl alcohol) $C_{19}H_{32}N_4O_2$ requires M+ 348).

The potency of this monoacylated spermine as an antagonist of the complex formed by the invertebrate L-quisqualate sub-type L-glutamate receptor and its ion channel was assayed using the electrically stimulated retractor unguis muscle of the locust (Schistocerca gregaria). Twitch amplitude was reduced from control (100%) levels at the following concentrations:

| | |
|---|---|
| $10^{-10}$M | 4% |
| $10^{-9}$M | 18% |
| $10^{-8}$M | 24% |
| $10^{-7}$M | 33% |
| $10^{-6}$M | 56% |
| $10^{-5}$M | 70% |
| The $IC_{50}$ = 6 x $10^{-5}$M | |

## Example 7

N-(2,4-Dihydroxyphenylacetyl)-spermine.-To a solution of 2,4-dibenzyloxyphenylacetic acid N-hydroxysuccinimide ester (93 mg, 0.22 mMol) in dichloromethane (3 ml) was added spermine (112 mg, 0.55 mMol, 2.5 equivalents)) in one portion. The colourless, homogeneous solution was sealed under an atmosphere of nitrogen and allowed to stand at 25°C for 24 h. The solution was concentrated in vacuo - (water aspirator) and the residue was then applied to a column of silica gel (Kieselgel 60, 230-400 mesh). The product was eluted with dichloromethane/methanol/- 0.880 ammonia solution (8:4:1). The desired amide

was eluted in fractions 10-15 (10 ml fractions) and was homogeneous when monitored by tlc on silica ($CH_2Cl_2$/MeOH/$NH_4OH$, 4:2:1), $R_f$ = 0.22, chromatogram visualised by inspection under UV light (254 nm) and by the production of a pink-purple stain with 0.3% ninhydrin in solution in acidic alcohol. The fractions containing the product were combined and concentrated in vacuo to yield a pale yellow gum.

This gum was dissolved in methanol (2 ml), filtered and the solution was then concentrated in vacuo (50 mg, 45%). The residue was dissolved in distilled water (2 ml) and lyophilised which gave the amide as a white solid (43 mg). The amide was dissolved in water (2 ml) and aqueous hydrochloric acid (2M, 0.5 ml) and palladium on carbon (10%, 11 mg) were then added. The mixture was stirred and hydrogenated at 1 atm and 25°C for 24 h. The catalyst was removed by filtration through a pad of Kieselguhr, eluted with water. The clear solution was then lyophilised which gave the desired amide trihydrochloride (34 mg) as a colourless glass whose spectroscopic data include : $UV_{max}$ 293 ($e_{max}$ 1 500)nm at pH = 11; M+1 353 (FAB matrix m-nitrobenzyl alcohol) $C_{18}H_{32}N_4O_3$ requires $M^+$ 352).

The potency of this monoacylated spermine as an antagonist of the complex formed by the invertebrate L-quisqualate sub-type L-glutamate receptor and its ion channel was assayed using electrically stimulated the retractor unguis muscle of the locust (Schistocerca gregaria). Twitch amplitude was reduced from control levels between the following concentrations: 1 x $10^{-5}$M and 9 x $10^{-5}$M, such that an approximately 50% reduction was obtained at 5 x $10^{-5}$M.

## Example 8

N-(3,4-Dihydroxyphenylacetyl)-spermine.-To a solution of 3,4-dibenzyloxyphenylacetic acid N-hydroxysuccinimide ester (115 mg, 0.26 mMol) in dichloromethane (5 ml) was added spermine (128 mg, 0.63 mMol, 2.45 equivalents) in one portion. The colourless, homogeneous solution was sealed under an atmosphere of nitrogen and allowed to stand at 25°C for 22 h. The solution was concentrated in vacuo (water aspirator) and the residue was then applied to a column of silica gel (Kieselgel 60, 230-400 mesh). The product was eluted with dichloromethane/methanol/0.880 ammonia solution (8:4:1). The desired amide was eluted in fractions 18-26 (10 ml fractions) and was homogeneous when monitored by tlc on silica ($CH_2Cl_2$/MeOH/$NH_4OH$, 8:4:1), $R_f$ = 0.16, chromatogram visualised by inspection under UV light (254 nm) and by the production of a pink-purple stain with 0.3% ninhydrin in solution in acidic alcohol. The fractions containing the product were combined and concentrated in vacuo to yield a pale yellow gum.

This gum was dissolved in methanol (2 ml), filtered and the solution was then concentrated in vacuo (48 mg. 35%). The residue was dissolved in distilled water (2 ml) and lyophilised which gave the amide as a colourless, viscous oil (46 mg). The amide was dissolved in water (2 ml) and aqueous hydrochloric acid (2M, 0.5 ml) and palladium on carbon (10%, 12 mg) were then added. The mixture was stirred and hydrogenated at 1 atm and 25°C for 24 h. The catalyst was removed by filtration through a pad of Kieselguhr, eluted with water. The clear solution was then lyophilised which gave the desired amide trihydrochloride as a colourless glass (32 mg) whose spectroscopic data include:
$UV_{max}$ 2 700) and 291 ($e_{max}$ 2 500)nm at pH = 11.

The potency of this monoacylated spermine as a non-competitive antagonist of the complex formed by the invertebrate L-quisqualate sub-type L-glutamate receptor and its ion channel was assayed using the electrically stimulated retractor unguis muscle of the locust (Schistocerca gregaria). Twitch amplitude was reduced from control levels between the following concentrations: 1 x $10^{-4}$M and 9 x $10^{-4}$M, such that an approximately 50% reduction was obtained at 5 x $10^{-4}$M.

## Example 9

N-(3,5-Dihydroxyphenylacetyl)-spermine.-To a solution of 3,5-dibenzyloxyphenylacetic acid (86 mg, 0.247 mMol) in dichloromethane (1 ml) was added a solution of dicyclohexylcarbodiimide (55 mg, 0.27 mMol 1.08 equivalents) in dichloromethane (1 ml) in one portion at 25°C. The colourless mixture was allowed to stand at 25°C for 1.5h during which time a voluminous white precipitate of the urea was formed. This precipitate was then removed by filtration and the residue washed with dichloromethane (2 x 1 ml). The filtrate and the washings were combined and a solution of spermine (150 mg, 0.74 mMol, 3.0 equivalents) in dichloromethane (1 ml) was added in one portion. The colourless, homogeneous solution was sealed under an atmosphere of nitrogen and allowed to stand at 25°C for 4 h. The solution was concentrated in vacuo (water aspirator) and the residue was then applied to a column of silica gel (Kieselgel 60, 230-400 mesh). The product was eluted with dichloromethane/methanol/0.800 ammonia solution (8:4:1).

The desired amide was eluted in fractions 15-18 (10 ml fractions) and was homogeneous when monitored by tlc on silica ($CH_2Cl_2$/MeOH/$NH_4OH$, 4:2:1) $R_f$ = 0.11, chromatogram visualised by inspection under UV light (254 nm) and by the production of a pink-purple stain with 0.3% ninhydrin in solution in acidic alcohol. The fractions containing the product were combined and concentrated in vacuo to yield a pale yellow gum.

This gum was dissolved in methanol (2 ml), filtered and the solution was then concentrated in vacuo (29 mg, 22%). The residue was dissolved in distilled water (2 ml) and lyophilised which gave the amide as a pale yellow solid (29 mg). The amide was dissolved in water (2 ml) and aqueous hydrochloric acid (2M, 0.5 ml) and palladium on carbon (10%, 11mg) were then added. The mixture was stirred and hydrogenated at 1 atm and 25 °C for 22 h. The catalyst was removed by filtration through a pad of Kieselguhr, eluted with water. The clear solution was then lyophilised which gave the desired amide trihydrochloride (24 mg) as a colourless glass whose spectroscopic data include: $UV_{max}$ 290 ($e_{max}$ 1 300)nm at pH = 11; M+1 353 (FAB matrix m-nitrobenzyl alcohol) $C_{18}H_{32}N_4O_3$ requires M+ 352).

The potency of this monoacylated spermine as an antagonist of the complex formed by the invertebrate L-quisqualate sub-type L-glutamate receptor and its ion channel was assayed using the electrically stimulated retractor unguis muscle of the locust (Schistocerca gregaria). Twitch amplitude was reduced from control levels between the following concentrations:

| | |
|---|---|
| 1 07 x $10^{-6}$M | 25% |
| 1.07 x $10^{-5}$M | 45% |

## Examples 10-22

In the present Examples, compounds of formula I were prepared by following the above General Procedure and adapting the methods described in Examples 1 to 7. The compounds prepared together with an indication of their potency as L-glutamate antagonists when tested in the locust leg retractor muscle pharmacological screen follow:

### Example 10

N-2-Hydroxybenzoyl)-spermine.-According to the General Procedure using 2-hydroxybenzoic acid (138 mg, 1.00 mMol), dicyclohexylcarbodiimide (226 mg, 1.10 mMol), and spermine (400 mg, 1.98 mMol) in dichloromethane (6 ml), activation during 3 h and coupling over 4 h. The product was eluted over silica gel with dichloromethane/methanol/0.880 ammonia solution (4:2:1). The desired amide was in fractions 8-15 and was homogeneous when monitored by tlc on silica ($CH_2Cl_2$/MeOH/$NH_4OH$, 4:2:1). $R_f$ = 0.23, (98 mg, 29%), lyophilisation gave 64 mg of a colourless, viscous oil whose spectroscopic data include: pmr (90 MHz, $^2H_2O$) 1.5-1.9 (m, 8H, 4 x $CH_2$-$CH_2$, 2.6-2.9 (m, 10H, 5 x $CH_2$-N), 3.25 (t, J = 7, 2H, $CON^2H$-$CH_2$-$CH_2$), 6.55-6.85 (m, 2H, 2 x ArH 3,5), and 7.1-7.3 (m, 2H, 2 x ArH 4,6)ppm; M+1 323 (FAB matrix m-nitrobenzyl alcohol and sodium chloride) $C_{17}H_{30}N_4O_2$ requires M+ 322).

The potency of this monoacylated spermine as an antagonist of the invertebrate L-quisqualate sub-type L-glutamate receptor and its ion channel was assayed using the electrically stimulated retractor unguis muscle of the locust (Schistocerca gregaria). Twitch amplitude was reduced from control level at 1.09 x $10^{-5}$M by approximately 25%.

### Example 11

N-(3-Hydroxybenzoyl)-spermine.-According to the General Procedure using 3-hydroxybenzoic acid (138 mg, 1.00 mMol), dicyclohexylcarbodiimide (226 mg, 1.10 mMol), and spermine (400 mg, 1.98 mMol) in dichloromethane (6 ml), activation during 3 h and coupling over 17 h. The product was eluted over silica gel with dichloromethane/methanol/0.880 ammonia solution (4:2:1). The desired amide was in fractions 8-13 and was homogeneous when monitored by tlc on silica ($CH_2Cl_2$/MeOH/$NH_4OH$, 4:2:1). $R_f$ = 0.29, (76 mg, 24%), lyophilisation gave 52 mg of a colourless, viscous oil whose spectroscopic data include: pmr (90 MHz, $^2H_2O$) 1.4-1.9 (m, 8H, 4 x $CH_2$-$CH_2$), 2.5-2.9 (m, 10H, 5 x $CH_2$-N), 3.25 (t, J = 7, 2H, $CON^2H$-$CH_2$-$CH_2$), 6.5-6.8

(m, 3H, 3 x ArH 2,4,6), and 7.0-7.3 (m, 1H, ArH 5)ppm; M+1 323 (FAB matrix m-nitrobenzyl alcohol and sodium chloride) $C_{17}H_{30}N_4O_2$ requires M+ 322).

The potency of this monoacylated spermine as an antagonist invertebrate L-quisqualate sub-type L-glutamate receptor and its ion channel was assayed using the electrically stimulated retractor unguis muscle of the locust (Schistocerca gregaria). Twitch amplitude was reduced from control levels at 1.02 x $10^{-5}$M by approximately 40%.

Example 12

N-(4-Hydroxybenzoyl)-spermine.-According to the General Procedure using 4-hydroxybenzoic acid (80 mg, 0.58 mMol), dicyclohexylcarbodiimide (125 mg, 0.61 mMol), and spermine (430 mg, 2.13 mMol) in DME/DMF (4 ml, 3:1), activation during 3 h and coupling over 48 h. The product was eluted over silica gel with dichloromethane/methanol/0.880 ammonia solution (2:2:1). The desired amide was in fractions 8-12 and was homogeneous when monitored by tlc on silica ($CH_2Cl_2$/MeOH/$NH_4OH$, 2:2:1). $R_f$ = 0.29, (23 mg, 12%), lyophilisation gave 7 mg of a colourless, viscous oil whose spectroscopic data include: pmr (90 MHz, $^2H_2O$) 1.4-1.9 (m, 8H, 4 x $CH_2$-$CH_2$), 2.5-2.9 (m, 10H, 5 x $CH_2$-N), 3.25 (t, J = 7, 2H, CON$^2$H-$CH_2$-$CH_2$), 6.6-6.9 (m, 2H, 3 x ArH 3,5), and 7.0-7.3 (m, 2H, 2 x ArH 2,6)ppm; M+1 323 (FAB matrix m-nitrobenzyl alcohol) $C_{17}H_{30}N_4O_2$ requires M+ 322).

The potency of this monoacylated spermine as an antagonist of the invertebrate L-quisqualate sub-type L-glutamate receptor and its ion channel was assayed using the electrically stimulated retractor unguis muscle of the locust (Schistocerca gregaria). Twitch amplitude was reduced from control levels: between $10^{-5}$M and $10^{-4}$M such than an approximately 50% reduction was obtained at 5 x $10^{-5}$M.

Example 13

N-(3-Hydroxycinnamoyl)-spermine.-According to the General Procedure using 3-hydroxycinnamic acid (160 mg, 0.97 mMol), dicyclohexylcarbodiimide (226 mg, 1.10 mMol), and spermine (400 mg, 1.98 mMol) in dichloromethane (6 ml), activation during 2 h and coupling over 21 h. The product was eluted over silica gel with dichloromethane/methanol/0.880 ammonia solution (4:2:1). The desired amide was in fractions 15-22 and was homogeneous when monitored by tlc on silica ($CH_2Cl_2$/MeOH/$NH_4OH$, 4:2:1). $R_f$ = 0.22, (108 mg, 32%), lyophilisation gave 90 mg of a yellow viscous gum whose spectroscopic data include: $UV_{max}$ 213 ($e_{max}$ 3 500), 230sh and 375 ($e_{max}$ 3 800) nm; pmr (90 MHz, $^2H_2O$) 1.4-2.0 (m, 8H, 4 x $CH_2$-$CH_2$), 2.6-3.0 (m, 10H, 5 x $CH_2$-N), 3.35 (t, J = 7, 2H, CON$^2$H-$CH_2$-$CH_2$), 6.4 (d, J = 16, 1H, CH=CH-C)), 3.55 (s, 2H, Ar-$CH_2$-CO), 6.6-6.9 (m, 3H, 3 x ArH 2,4,6), and 7.2-7.6 (m, 2H, ArH 5 and ArCH=CH))ppm; M+1 349 (FAB matrix m-nitrobenzyl alcohol) $C_{19}H_{32}N_4O_2$ requires M+ 348).

The potency of this monoacylated spermine as an antagonist of the invertebrate L-quisqualate sub-type L-glutamate receptor and its ion channel was assayed using the electrically stimulated retractor unguis muscle of the locust (Schistocerca gregaria). Twitch amplitude was reduced from control levels at 9.2 x $10^{-7}$M by approximately 25%.

Example 14

N-(3-Fluoro-4-hydroxyphenylacetyl)-spermine.-According to the General Procedure using 3-fluoro-4-hydroxyphenylacetic acid (85 mg, 0.50 mMol), dicyclohexylcarbodiimide (106 mg, 0.31 mMol), and spermine (512 mg, 2.53 mMol) in DME/DMF (4 ml, 3:1), activation during 2 h and coupling over 48 h. The product was eluted over silica gel with dichloromethane/methanol/0.880 ammonia solution (4:2:1). The desired amide was in fractions 12-19 and was homogeneous when monitored by tlc on silica ($CH_2Cl_2$/MeOH/$NH_4OH$, 4:2:1). $R_f$ = 0.19, (39 mg, 22%), lyophilisation gave 30 mg of a colourless, viscous oil whose spectroscopic data include: pmr (90 MHz, $^2H_2O$) 1.6-2.2 (m, 8H, 4 x $CH_2$-$CH_2$), 2.85-3.2 (m, 10H, 5 x $CH_2$-N), 3.4 (t, J = 7, 2H, CON$^2$H-$CH_2$-$CH_2$), 3.6 (s, 2H, Ar-$CH_2$-CO), 6.8-7.1 (m, 2H, 2 x ArH 5,6), and 7.1 (d, 3 J H-F=11, H, ArH 2)ppm.

The potency of this monoacylated spermine as an antagonist of the invertebrate L-quisqualate sub-type L-glutamate receptor and its ion channel was assayed using the electrically stimulated retractor unguis muscle of the locust (Schistocerca gregaria). Twitch amplitude was reduced from control levels between $10^{-4}$M and $10^{-3}$M, such that an approximately 50% reduction was obtained at 5 x $10^{-4}$M.

Example 15

N-(2-Methoxyphenylacetyl)-spermine.-According to the General Procedure using 2-methoxyphenylacetic acid (81 mg. 0.49 mMol), dicyclohexylcarbodiimide (53 mg, 0.26 mMol), and spermine (201 mg, 0.99 mMol) in DME (4 ml), activation during 2.5 h and coupling over 48 h. The produce was eluted over silica gel with the lower layer of dichloromethane/methanol/0.880 ammonia solution (2:1:1). The desired amide was in fractions 6-10 and was homogeneous when monitored by tlc on silica ($CH_2Cl_2/MeOH/NH_4OH$ lower layer, 2:1:1). $R_f$ = 0.25, (28 mg, 31%), lyophilisation gave 16 mg of a colourless, viscous oil whose spectroscopic data include: pmr (90 MHz, $^2H_20$) 1.35-1.85 (m, 8H, 4 x $CH_2$-$CH_2$), 2.4-2.9 (m, 10H, 5 x $CH_2$-N), 3.25 (t, J = 7, 2H, $CON^2H$-$CH_2$-$CH_2$), 3.5 (s, 2H, Ar-$CH_2$-CO), 3.83(s, 3H, $OCH_3$), 6.75-7.05 (m, 2H, 2 x ArH 3,5), and 7.15-7.35(m, 2H, 2 x ArH 4,6)ppm.

The potency of this monoacylated spermine as a non-competitive antagonist of the invertebrate L-quisqualate sub-type L-glutamate receptor and its ion channel was assayed using the electrically stimulated retractor unguis muscle of the locust (Schistocerca gregaria). Twitch amplitude was reduced from control (100%) levels between 1 x $10^{-4}$M and 1 x $10^{-3}$M, such that an approximately 50% reduction was obtained at 5 x $10^{-4}$M.

Example 16

N-(4-Methoxyphenylacetyl)-spermine.-According to the General Procedure using 4-methoxyphenylacetic acid (83 mg, 0.50 mMol), dicyclohexylcarbodiimide (56 mg, 0.27 mMol), and spermine (201 mg, 0.99 mMol) in DME (4 ml), activation during 2.5 h and coupling over 48 h. The product was eluted over silica gel with the lower layer of dichloromethane/methanol/0.880 ammonia solution (4:1:1). The desired amide was in fractions 16-25 and was homogeneous when monitored by tlc on silica ($CH_2Cl_2/MeOH/NH_4OH$ lower layer, 4:1:1), $R_f$ = 0.07, (30 mg, 32%), lyophilisation gave 21 mg of a colourless, viscous oil whose spectroscopic data include: pmr (90 MHz, $^2H_20$) 1.4-1.9 (m, 8H, 4 x $CH_2$-$CH_2$), 2.4-2.9 (m, 10H, 5 x $CH_2$-N), 3.23 (t, J = 7, 2H, $CON^2H$-$CH_2$-$CH_2$), 3.5 (s, 2H, Ar-$CH_2$-CO), 3.83(s, 3H, $OCH_3$), 6.8-6.95 (m, 2H, 2 x ArH 3,5), and 7.1-7.3 (m, 2H, 2 x ArH 2,6)ppm.

The potency of this monoacylated spermine as an antagonist of the invertebrate L-quisqualate sub-type L-glutamate receptor and its ion channel was assayed using the electrically stimulated retractor unguis muscle of the locust (Schistocerca gregaria). Twitch amplitude was reduced from control (100%) levels between 1 x $10^{-4}$M and 1 x $10^{-3}$M, such that an approximately 50% reduction was obtained at 5 x $10^{-4}$M.

Example 17

N-(2-Methoxyphenylacetyl)-N′,N″-bis(3-aminopropyl)-1,3-propanediamine.-According to the General Procedure using 2-methoxyphenylacetic acid (80 mg, 0.48 mMol), dicyclohexylcarbodiimide (106 mg, 0.51 mMol), and bis(3-aminopropyl)-1,3- propanediamine (452 mg, 2.40 mMol) in DME (4 ml, activation during 2 h and coupling over 48 h. The product was eluted over silica gel with a lower layer of dichloromethane/methanol/0.880 ammonia solution (2:1:1). The desired amide was in fractions 4-7 and was homogeneous when monitored by tlc on silica ($CH_2Cl_2/MeOH/NH_4OH$ lower layer, 2:1:1), $R_f$ = 0.23, (55 mg, 34%), lyophilisation gave 54 mg of a colourless, viscous oil whose spectroscopic data include: pmr (90 MHz, $C^2HCl_3$) 0.9-1.4 (m, 4H, 4 x NH), 1.3-2.0 (m, 6H, 3 x $CH_2$-$CH_2$), 2.3-2.9 (m, 10H, 5 x $CH_2$-N), 3.22 (app. q, J = 7, 2H, CONH-$CH_2$-$CH_2$), 3.5 (s, 2H, Ar-$CH_2$-CO), 3.8(s, 3H, $OCH_3$), 6.35(br t, J = 7, CONH-$CH_2$), 6.7-7.0 (m, 2H, 2 x ArH 3,5), and 7.1-7.35 (m, 2H, 2 x ArH 4,6)ppm.

The potency of this compound as an antagonist of the invertebrate L-quisqualate sub-type L-glutamate receptor and its ion channel was assayed using the electrically stimulated retractor unguis muscle of the locust (Schistocerca gregaria). Twitch amplitude was reduced from control levels between $10^{-4}$M and 9 x $10^{-3}$M, such that an approximately 50% reduction was obtained at 9 x $10^{-4}$M.

Example 18

N-(4-Methoxyphenylacetyl)-N′,N″-bis(3-aminopropyl)-1,3-propanediamine.-According to the General Procedure using 4-methoxyphenylacetic acid (80 mg, 0.48 mMol), dicyclohexylcarbodiimide (106 mg, 0.51 mMol), and bis(3- aminopropyl)-1,3-propanediamine (464 mg, 2.46 mMol) in DME (6 ml), activation during 2

h and coupling over 48 h. The product was eluted over silica gel with the lower layer of dichloromethane/methanol/0.880 ammonia solution (2:1:1). The desired amide was in fractions 4-8 and was homogeneous when monitored by tlc on silica ($CH_2Cl_2$/MeOH/$NH_4OH$ lower layer, 2:1:1), $R_f$ = 0.30, (35 mg, 22%) lyophilisation gave 26 mg of a colourless, viscous oil whose spectroscopic data include: pmr (90 MHz, $C^2HCl_3$) 1.0-1.4 (m, 4H, 4 x NH), 1.3-2.0 (m, 6H, 3 x $CH_2$-$CH_2$), 2.2-2.9 (m, 10H, 5 x $CH_2$-N), 3.25 (app. q, J = 7, 2H, CONH-$CH_2$-$CH_2$), 3.42 (s, 2H, Ar-$CH_2$-CO), 3.76 (s, 3H, $OCH_3$), 6.63 (br t, J = 7, CONH-$CH_2$), 6.8 (d, J = 8, 2H, 2 x ArH 3,5), and 7.15 (d, J = 8, 2H, 2 x ArH 2,6)ppm.

The potency of this compound as an antagonist of the complex formed by the invertebrate L-quisqualate sub-type L-glutamate receptor and its ion channel was assayed using the electrically stimulated retractor unguis muscle of the locust (Schistocerca gregaria). Twitch amplitude was reduced from control (100%) levels between 1 x $10^{-4}$M and 9 x $10^{-3}$M, such that an approximately 50% reduction was obtained at 9 x $10^{-4}$M.

## Example 19

N-(2-Hydroxyphenylacetyl)-N′,N″-bis(3-aminopropyl)-1,3-propanediamine.-According to the General Procedure using 2-hydroxyphenylacetic acid (160 mg, 1.05 mMol), dicyclohexylcarbodiimide (230 mg, 1.11 mMol), and bis(3-aminopropyl)-1,3-propanediamine (806 mg, 4.28 mMol) in DME (6 ml), activation during 4.5 h and coupling over 24 h. The product was eluted over silica gel with dichloromethane/- methanol/0.880 ammonia solution (4:1:1). The desired amide was in fractions 8-20 and was homogeneous when monitored by tlc on silica ($CH_2Cl_2$/MeOH/$NH_4OH$, 4:2:1), $R_f$ = 0.11, (235 mg, 69%), lyophilisation gave 188 mg of a colourless, viscous oil whose spectroscopic data include: pmr (90 MHz, $C^2HCl_3$) 1.4-1.8 (m, 6H, 3 x $CH_2$2-$CH_2$), 2.3-2.85 (m, 10H, 5 x $CH_2$-N), 3.2 (t, J = 7, 2H, $CON^2H$-$CH_2$-$CH_2$), 3.5 (s, 2H, Ar-$CH_2$-CO), 3.9 (br s, 6H, 5 x NH and OH), 6.65-6.9 (m, 2H, 2 x ArH 3,5), and 6.95-7.2 (m, 2H, 2 x ArH 4,6)ppm.

The potency of this compound as an antagonist of the complex formed by the invertebrate L-quisqualate sub-type L-glutamate receptor and its ion channel was assayed using the electrically stimulated retractor unguis muscle of the locust (Schistocerca gregaria). Twitch amplitude was reduced from control (100%) levels between 1 x $10^{-4}$M and 9 x $10^{-3}$M, such that an approximately 50% reduction was obtained at 9 x $10^{-4}$M.

## Example 20

N-(3-Hydroxyphenylacetyl)-N′,N″-bis(3-aminopropyl)-1,3- propanediamine.-According to the General Procedure using 3-hydroxyphenylacetic acid (150 mg, 0.98 mMol), dicyclohexylcarbodiimide (226 mg, 1.10 mMol), and bis(3-aminopropyl)-1,3-propanediamine (370 mg, 1.97 mMol) in dichloromethane (6 ml), activation during 2 h and coupling over 3 h. The product was eluted over silica gel with dichloromethane/methanol/0.880 ammonia solution (4:2:1). The desired amide was in fractions 13-21 and was homogeneous when monitored by tlc on silica ($CH_2Cl_2$/MeOH/$NH_4OH$, 4:2:1), $R_f$ = 0.27, (97 mg, 31%), lyophilisation gave 79 mg of a colourless, viscous oil whose spectroscopic data include: pmr (90 MHz, $^2H_20$) 1.4-2.0 (m, 6H, 3 x $CH_2$2-$CH_2$), 2.3-2.9 (m, 10H, 5 x $CH_2$-N), 3.25 (t, J = 7, 2H, $CON^2H$-$CH_2$-$CH_2$), 3.5 (s, 2H, Ar-$CH_2$-CO), 6.55-6.75 (m, 3H, 3 x ArH 2,4,6), and 7.05-7.3 (m, H, ArH)ppm.

The potency of this compound as an antagonist of the complex formed by the invertebrate L-quisqualate sub-type L-glutamate receptor and its ion channel was assayed using the electrically stimulated retractor unguis muscle of the locust (Schistocerca gregaria). Twitch amplitude was reduced from control (100%) levels between 1.04 x $10^{-4}$M by approximately 60%.

## Example 21

N-(4-Hydroxyphenylacetyl)-N′,N″-bis(3-aminopropyl)-1,3-propanediamine.-According to the General Procedure using 4-hydroxyphenylacetic acid(160 mg, 1.05 mMol), dicyclohexylcarbodiimide (231 mg, 1.12 mMol), and bis(3-aminopropyl)-1,3-propanediamine (806 mg, 4.28 mMol) in DME (6 ml), activation during 4.5 h and coupling over 48 h. The product was eluted over silica gel with dichloromethane/methanol/0.880 ammonia solution (4:2:1). The desired amide was in fractions 11-20 and was homogeneous when monitored by tlc on silica ($CH_2Cl_2$/MeOH/$NH_4OH$, 4:2:1), $R_f$ = 0.13, (88 mg, 26%), lyophilisation gave 74 mg of a colourless gum whose spectroscopic data include: pmr (90 MHz, $^2H_2O$) 1.4-2.0 (m, 6H, 3 x $CH_2$-$CH_2$), 2.4-

2.9 (m, 10H, 5 x $CH_2$-N), 3.18 (t, J = 7, 2H, $CON^2H$-$CH_2$-$CH_2$), 3.4 (s, 2H, Ar-$CH_2$-CO), 6.68 (d, J = 8, 2H x ArH 3,5), and 7.05 (d, J = 8, 2H, 2 x ArH 2,6)ppm.

The potency of this compound as an antagonist of the complex formed by the invertebrate L-quisqualate sub-type L-glutamate receptor and its ion channel was assayed using the electrically stimulated retractor unguis muscle of the locust (Schistocerca gregaria). Twitch amplitude was reduced from control (100%) levels between 1 x $10^{-4}$M and 9 x $10^{-3}$M, such that an approximately 50% reduction was obtained at 9 x $10^{-4}$M, and an approximately 30% reduction at $10^{-4}$M.

## Example 22

N-(4-Hydroxyphenylpropanoyl)-spermine.-To a solution of 4-hydroxyphenylpropanoic acid (83 mg, 0.50 mMol) in 1,2-dimethoxyethane (DME) (1 ml) was added a solution of dicyclohexylcarbodiimide (107 mg, 0.52 mMol, 1.04 equivalents) in DME (1 ml) in one portion at 25° C. The colourless mixture was allowed to stand at 25° C for 5 h during which time a voluminous white precipitate of the urea was formed. This precipitate was then removed by filtration and the residue washed with DME (2 x 1 ml). The filtrate and the washings were combined and a solution of spermine (401 mg, 1.98 mMol, 4.0 equivalents) in DME/dimethylformamide (2 ml, 1:1) was added in one portion. The colourless, homogeneous solution was sealed under an atmosphere of nitrogen and allowed to stand at 25° C for 48 h. The solution was concentrated in vacuo (water aspirator) and the residue was then applied to a column of silica gel (Kieselgel 60, 230-400 mesh). The product was eluted with dichloromethane/methanol/0.880 ammonia solution (4:2:1). The desired amide was eluted in fractions 10-16 (10 ml fractions) and was homogeneous when monitored by tlc on silica ($CH_2CH_2$/MeOH/$NH_4$Oh, 4:2:1), $R_f$ = 0.16, chromatogram visualised by inspection under UV light (254 nm) and by the production of a pink-purple stain with 0.3% ninhydrin in solution in acidic alcohol. The fractions containing the product were combined and concentrated in vacuo to yield a colourless oil.

This oil was dissolved in methanol (2 ml), filtered and the solution was then concentrated in vacuo (66 mg, 50%). The residue was dissolved in distilled water (2 ml) and lyophilised which gave the amide as a colourless, viscous oil (44 mg) whose spectroscopic data include: $UV_{max}$ 224 ($e_{max}$ 4 900) and 278 ($e_{max}$ 1 600) nm; pmr (90 MHz, $^2H_20$) 1.2-2.1 (m, 8H, 4 x $CH_2$-$CH_2$), 2.3-3.0 (m, 14H, 5 x $CH_2$-N and Ar-$CH_2$-$CH_2$), 3.18 (t. J = 7, 2H, $CON^2H$-$CH_20CH_2$), 6.75 (d, J = 9, 2H, 2 x ArH 3,5), and 7.1 (d, J = 9, 2H, 2 x ArH 4,6)-ppm.

The potency of this monoacylated spermine as an antogonist of the complex formed by the invertebrate L-quisqualate sub-type L-glutamate receptor and its ion channel was assayed using the electrically stimulated retractor unquis muscle of the locust (Schistorcerca gregaria). Twitch amplitude was reduced from control levels at the following concentrations:

| | |
|---|---|
| 2.9 x $10^{-8}$M | 10% |
| 2.9 x $10^{-7}$M | 25% |
| 1.45x $10^{-6}$M | 30% |
| 2.9 x $10^{-6}$M | 38% |
| 1.45x $10^{-5}$M | 38% |
| 2.9 x $10^{-5}$M | 81% |
| 7.25x $10^{-5}$M | 100% |

The $IC_{50}$ = 6 x $10^{-6}$M

## Claims

1. The use as a biocide of a compound of formula I optionally in the form of an acid addition salt

I:

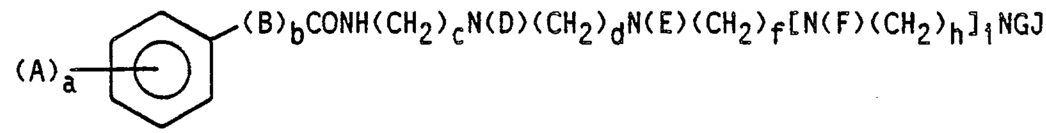

in which formula:
A represents a substituent which is:
hydroxyl, O-alkyl, O-cycloalkyl, O-alkenyl, O-aryl, O-aralkyl, O-carbamate, O-carbonate, O-acyl or halogen
a is O-5;
the substituents A are identical or different when a is more than 1;
B represents a $C_1$-$C_6$ aliphatic hydrocarbon group optionally carrying one or more of the substituents: hydroxyl, amino, halogen, $C_1$-$C_4$ alkoxy, $C_1$-$C_4$ alkyl, aryloxy or carboalkoxy and optionally comprising one or more sites of unsaturation and/or one or more carbonyl groups or ketal derivatives thereof;
b is O or 1;
c, d, f and h, which may be identical or different, are 2, 3, 4, 5 or 6;
and is is 0 or 1
D, E and F, which may be identical or different, represent hydrogen or $C_1$-$C_4$ alkyl or cycloalkyl, and
G and J which may be identical or different represent hydrogen, alkyl or cycloalkyl or G and J together with the nitrogen atom to which they are attached represent a saturated heterocyclic ring system.

2. The use according to Claim 1, in which A in the compound or formula I represents hydroxyl.

3. The use according to Claim 1 or 2, in which A in the compound of formula I represents a substituent carried at the 4-position in the benzene nucleus.

4. The use according to any preceding Claim in which A in the compound of formula I represents 1 or 2.

5. The use according to any preceding Claim in which B in the compound of formula I represents the group $-CH_2-$, $CH_2-CH_2-$ or $-CH=CH-$.

6. The use according to any preceding Claim in which the substituents D, E and F in the compound of formula I represent hydrogen.

7. The use according to any preceding Claim, in which i in the compound of formula I is zero.

8. The use according to any preceding Claim, in which c, d and f in the compound of formula I represent respectively 3, 4 and 3 or are each 3.

9. The use according to any preceding Claim, in which G and J in the compound of formula I each represent hydrogen.

10. The use as a biocide of a compound of formula I described in any one of the Examples.

11. The use as a biocide of a compound of the following formula:

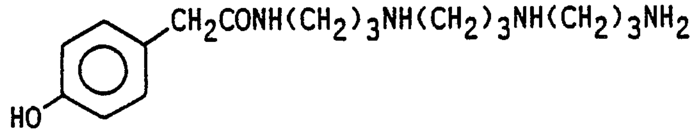

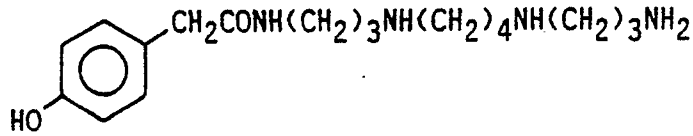

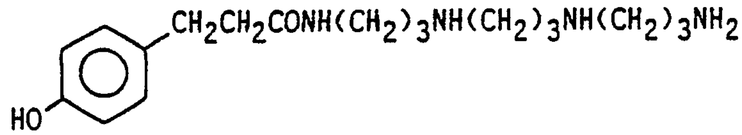

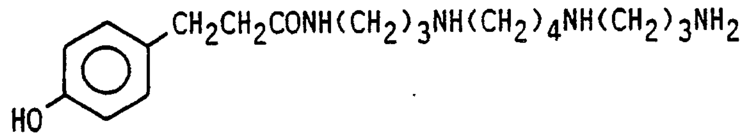

12. The use as agricultural or horticultural biocide according to any preceding Claim, of a compound of formula I.

13. The use as an arthropod biocide according to any preceding Claim, of a compound of formula I.

14. The use according to Claim 13 wherein the biocide is an insecticide.

15. The use according to Claim 13 or 14 on which the biocide is of a species which is a prey of a spider.

16. The use according to any of Claims 13 to 15, in which the biocide is of a locust, grasshopper, blowfly larva or Lepidoptera larva.

17. A method of pest control which comprises treating a pest or a surface of environment susceptible to pest infestation with an effective amount of formula I.

18. A method according to Claim 17, in which the pest is an arthropod.

19. A composition for use as a biocide which comprises a compound of formula I together with a diluent or carrier thereof.

20. A composition according to Claim 19, for use as an arthropod biocide.

21. A process for the production of a compound of formula I which comprises reacting an acid of formula II or esterifiable derivative thereof,

II 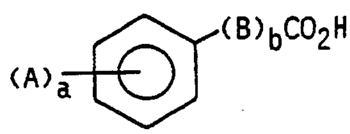

with an amine or of formula III or acid addition salt thereof:

III $NH_2(CH_2)_cN(D)CH_2)dN(E)CH_2)_f[N(F)CH_2)_h]_iNGJ$.

European Patent Office

# EUROPEAN SEARCH REPORT

Application Number

EP 89 30 8742

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A<br><br><br>X | GB-A-1 043 345 (MINNESOTA MINING AND MANUFACTURING CO.)<br>* Claims 1-2,6 *<br>--- | 1-20<br><br><br>21 | A 01 N 37/20<br>A 01 N 37/38 |
| T | BIOMEDICAL RESEARCH, vol. 10, no. 3, 1989, pages 185-189, Tokyo, JP; T. ASAMI et al.: "Acylpolyamines mimic the action of joro spider toxin (JSTX) on crustacean muscle glutamate receptors"<br>* Page 187, lines 32-48 *<br>--- | 1-21 | |
| A | PESTICIDE SCIENCE, vol. 20, no. 4, 1987, pages 315-320, Society of Chemical Industry, Barking, Essex, GB; D.L.J. QUICKE et al.: "Peptides as modulators and channel blockers"<br>* Page 316, paragraph 3 *<br>----- | 1-20 | TECHNICAL FIELDS SEARCHED (Int. Cl.5)<br><br>A 01 N |

The present search report has been drawn up for all claims

| Place of search | Date of completion of the search | Examiner |
|---|---|---|
| THE HAGUE | 28-11-1989 | RAVANEL C.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)